# EUROPÄISCHE PATENTSCHRIFT

(11) **EP 4 040 133 B1**
(45) Veröffentlichungstag und Bekanntmachung des Hinweises auf die Patenterteilung: **14.02.2024**
(21) Anmeldenummer: 21183577.2
(22) Anmeldetag: 02.07.2021
(51) Int. Cl.: G01M 5/00

(54) **MOBILE ERKENNUNG VON STRUKTURELLEN SCHÄDEN AN BALKENBRÜCKENSEGMENTEN**
MOBILE DETECTION OF STRUCTURAL DAMAGE TO GIRDER BRIDGE SEGMENTS
DÉTECTION MOBILE DES DOMMAGES STRUCTURAUX SUR LES SEGMENTS DE PONT À POUTRES

(30) Priorität: 08.02.2021 DE 102021102880
(43) Veröffentlichungstag der Anmeldung: 10.08.2022
(73) Patentinhaber: Lucks, Christoph, 22303 Hamburg (DE); Bruhnsen, Paul, 22880 Wedel (DE)
(72) Erfinder: Lucks, Christoph, 22303 Hamburg (DE); Bruhnsen, Paul, 22880 Wedel (DE)
(74) Vertreter: Raffay & Fleck

(56) Entgegenhaltungen:
- WO-A1-2019/235409
- US-A1- 2020 292 428
- PRAKASH G: "A deflection-based practicable method for health monitoring of in-service bridges", MEASUREMENT SCIENCE AND TECHNOLOGY, IOP, BRISTOL, GB, Bd. 32, Nr. 7, 6. Mai 2021 (2021-05-06), Seite 75108, XP020367411, ISSN: 0957-0233, DOI: 10.1088/1361-6501/ABE287 [gefunden am 2021-05-06]
- Christoph Verfasser ET AL: "BMG Bauwerk Monitoring GmbH Jarrestrasse 27 22303 Hamburg Sitz Hamburg, Amtsgericht Hamburg HRB 145803 Geschäftsführer Christoph Lucks Bauwerksmonitoring mit laser-basierter Verformungsmessung ... am Beispiel einer Spannbetonbrücke Christoph Lucks Ergänzungen", , 8. Mai 2020 (2020-05-08), Seiten 1-14, XP055869648, Gefunden im Internet: URL:https://s3923d08789b6ed75.jimcontent.c om/download/version/1595930447/module/7699 105011/name/Bauwerkmonitoring%2008.05.2020 .pdf [gefunden am 2021-12-06]

## Beschreibung

Die vorliegende Erfindung betrifft die Erkennung von strukturellen Schäden an Balkenbrückensegmenten.

Derartige Verfahren sind vielfältig aus dem Stand der Technik bekannt, wie der US 2015 / 0 198 502 A1 oder der CN 2 07 751 471 U. Sie erfordern aber in der Regel Vorbereitungen, großen Aufwand und/oder lange Sperrungen des Brückensegmentes. Weitere erfindungsrelevante Dokumente sind sowohl Patentdokumente WO 2019/235409 A1 und US 2020/292428 A1 als auch Nichtpatentliteratur Prakash G: "A deflectionbased practicable method for health monitoring of in-service bridges" und Christoph Lucks: "Bauwerksmonitoring mit laser-basierter Verformungsmessung".

Auch hat sich gezeigt, dass selbst bei günstigen Bedingungen schadensbedingte Frequenzverschiebungen im Rauschband der temperaturbedingten Frequenzänderungen liegen und somit in der Regel ungeeignet sind.

Aufgabe ist es, ein einfaches und schnelles Verfahren zur zuverlässigen Erkennung bereit zu stellen.

Der Erfinder hat in zahlreichen Versuchen überraschend festgestellt, dass die verschiedenen Balkenbrückensegmente auf einfache Weise untersuchbar, analysierbar und klassifizierbar sind.

Gelöst wird die Aufgabe unter anderem durch ein Verfahren zum insbesondere mobilen, Erkennen eines strukturellen Schadens eines Balkenbrückensegments und/oder zur, insbesondere mobilen, Bestimmung der Tragfähigkeitsreduzierung eines Balkenbrückensegments, wobei die Tragwerkslänge des Balkenbrückensegments bekannt ist oder bestimmt wird, und wobei eine Auslenkung des Balkenbrückensegments während einer Last auf das Balkenbrückensegments gemessen wird. Diese Last wird insbesondere durch ein Gewicht, insbesondere einen LKW, auf der Brücke aufgebracht.

Dabei wird insbesondere eine gemittelte Auslenkung verwendet, die Schwingungen des Brückensegments heraus mittelt. Die Auslenkung wird insbesondere im Vergleich zum nicht belasteten Zustand, insbesondere vor und/oder nach, insbesondere innerhalb von weniger als einer Stunde, insbesondere weniger als fünf min vor Aufbringen und/oder nach Entfernen, der Last, gemessen. Insbesondere wird nach Entfernen der Last gewartet, bis die Schwingung abgeklungen ist bevor die Ruhelage bestimmt wird oder es werden die Messdaten der Ruhelage mathematisch so bereinigt/korrigiert, dass das Nachschwingen herausgerechnet wird, insbesondere herausgemittelt wird.

So wird insbesondere eine Differenz zwischen Ruhelage und belasteter Lage als Auslenkung ermittelt. Dabei wird die Messung insbesondere in der Mitte oder einem mittleren Bereich, insbesondere von maximal 15%, insbesondere maximal 5%, der Tragwerkslänge, der Tragwerkslänge gemessen und/oder es wird über die Tragwerklänge die maximale Auslenkung bestimmt.

Dabei wird insbesondere ein struktureller Schaden zumindest dann als erkannt angenommen, wenn die Auslenkung eine vorbestimmte Referenzauslenkung um mehr als eine vordefinierte Spanne, insbesondere 25% der Referenzauslenkung, überschreitet und/oder wobei zumindest dann, wenn die Referenzauslenkung nicht überschritten wird, angenommen wird, dass kein struktureller Schaden vorliegt, wobei die Referenzauslenkung im Bereich von 0,001 bis 0,005, insbesondere von 0,0015 und/oder bis 0,0027 mm, pro 1m Tragwerkslänge bei 1t Last liegt.

Gelöst wird die Aufgabe auch durch eine Verwendung einer vorbestimmten Referenzauslenkung im Bereich von 0,001 bis 0,005, insbesondere von 0,0015 und/oder bis 0,0027 mm, pro 1m Tragwerkslänge bei 1t Last, zur Erkennung struktureller Schäden eines Balkenbrückensegments und/oder zur Bestimmung der Tragfähigkeitsreduzierung eines Balkenbrückensegments. wobei die Tragwerkslänge des Balkenbrückensegments bekannt ist oder bestimmt wird.

Dabei wird eine Auslenkung des Balkenbrückensegments während einer Last auf das Balkenbrückensegments gemessen, und mit der Referenzauslenkung verglichen. Dabei wird vorteilhafterweise zur Erkennung struktureller wobei bei Überschreiten Referenzauslenkung um mehr als eine vordefinierte Spanne, insbesondere 25% der Referenzauslenkung, eine strukturelle Schädigung erkannt wird und und/oder wobei zumindest dann, wenn die Referenzauslenkung nicht überschritten wird, angenommen wird, dass kein struktureller Schaden vorliegt.

Auf diese Weise lässt sich auf sehr einfache Weise eine zuverlässige Erkennung von strukturellen Schäden auch ohne vorherige Referenzmessung realisieren, zumindest solcher Schäden, die relevante Auswirkung auf Sicherheit und/oder Planung haben.

Mit besonderem Vorteil kann die Erkennung auch differenzierter durchgeführt werden. Dazu kann der Referenzwert im genannten Bereich genau und/oder auf den Brückentyp angepasst festgelegt werden und/oder kann die vordefinierte Spanne verkleinert oder unterteilt werden.

Insbesondere können verschiedene Schweregrade der Schäden unterteilt werden und/oder der Tragfähigkeitsverlust näherungsweise aus der Überschreitung der Referenzauslenkung abgeleitet werden. Insbesondere kann der prozentuale Tragfähigkeitsverlust aus der prozentualen Überschreitung der Referenzauslenkung durch Multiplikation mit einem Faktor im Beriech von 2 bis 3,5, insbesondere 2,5 bis 3, besonders bevorzugt 2,6 bis 2,7, insbesondere 2,65 abgeleitet werden. Unter Tragfähigkeitsverlust ist insbesondere die Reduzierung der Steifigkeit und/oder eine größere Verformung bei gleicher Last zu verstehen.

Dies haben Versuche und Messungen an zahlreichen Brücken ergeben.

Eine Unterteilung der Spannen kann beispielsweise durch Festlegung von Schadensklassen erfolgen, bei denen insbesondere unterschiedliche Maßnahmen ergriffen werden. So kann beispielsweise in einer ersten Schadensklasse die Überwachung verbessert und/oder intensiviert werden, beispielsweise die Biegelinie erfasst und/oder die Erfassung/Messung in kürzeren Abständen oder kontinuierlich wiederholt werden. In einer zweiten Schadensklasse kann dann beispielsweise die Verkehrslast reduziert werden. Insbesondere hat es sich als zielführend erwiesen eine erste Schadensklasse mit Tragfähigkeitsverlusten bis zu einer Tragfähigkeitsminderung im Bereich von 20 bis 35% anzusetzen und eine zweite mit Tragfähigkeitsverlusten über der der ersten Schadensklasse. Dazu bietet es sich an, die Unterscheidung zwischen erster und zweiter Schadensklasse bei einem vorbestimmten Wert im Bereich von 15 bis 30%, insbesondere im Bereich von 20 bis 30%, festzulegen.

Zudem bietet es sich an, die untere Grenze für die Annahme der ersten Schadensklasse eine Überschreitung der Referenzdurchbiegung um einen vorbestimmten Wert unterhalb, insbesondere mindestens 10 Prozentpunkte unterhalb, des vorbestimmten Wertes für die Annahme der zweiten Schadensklasse, und/oder im Bereich von 2 bis 20%, insbesondere 5 bis 20% durchzuführen. Insbesondere wird bei niedrigeren Überschreitungen eine zu vernachlässigende und/oder keine Schädigung angenommen. Mit Vorteil erfolgt die Messung mittels Laser, insbesondere Laserentfernungsmessung, insbesondere auf ein Target mit schräger Spiegelfläche, und/oder mittels Dehnungsmessstreifen.

So lassen sich auch mit mobilen Messvorrichtungen schnelle und genaue Messungen erreichen werden. Der Eingriff in den Verkehrsfluss kann auf wenige Minuten und leichte Beeinflussung reduziert werden. Insbesondere kann ein Last-LKW, der die Last darstellt, so auf die Brücke oder über die Brücke gefahren werden, dass er, insbesondere alleine, die Brücke belastet. Durch ein Überfahren lässt sich zudem der Einfluss der Last an unterschiedlichen Stellen erfassen. Dazu reicht es aus, den Verkehr beidseits vor der Brücke etwas abzubremsen, sodass ein kleines Zeitfenster entsteht, indem im Wesentlichen keine Last auf der Brücke ist und vorher und/oder nachher der Last-LKW die einzige oder im Wesentlichen die einzige Last darstellt.

Mit besonderem Vorteil wir die Referenzauslenkung im Bereich von 0,002125 mm +/- 20% pro 1m Tragwerkslänge bei 1t Last vorbestimmt.

Dadurch lässt sich eine noch genauere und trennscharfe Aussage treffen. Bevorzugt wird die Referenzauslenkung für einzelne Balkenbrückensegmenttypen Balkenbrückensegmenttypen der folgenden Liste und/oder Gruppen von aus der folgenden Liste jeweils, insbesondere von einander abweichend, vorbestimmt:
- Balken aus Vollmaterial
- Balken als Hohlkasten
- Fachwerkträger
- Brücken aus Spannbeton
- Spannbetonvollplattenbrücke
- Spannbetonplattenbalkenbrücke
- Spannbetonplattenbalkenbrücke mit nachträglich vorgespannten Einzelstegen
- Spannbetonplattenbalkenbrücke mit ab Werk vorgespannten Einzelstegen
- Spannbetonhohlkastenträger
- Stahverbundbrücken
- Stahlverbundbrücke mit Hohlkastenüberbau
- Zweistegige Stahlverbundbrücke
- Mehrstegige Stahlverbundbrücke
- Stahlträgerbrücken
- Stahlträgerplattenbalkenbrücke mit orthotroper Fahrbahnplatte
- Stahlhohlkastenbrücke mit orthotroper Fahrbahnplatte
- Stahlträgerbrücke mit aufgelegter Betonplatte
- Stahlträgerhohlkastenbrücke
- Stahlträgerfachwerkträgerbrücke

Dadurch lassen sich feine Unterschiede der einzelnen Typen berücksichtigen und die Erkennung weiter verbessert werden.

Mit Vorteil wird bei Erkennen einer strukturellen Schädigung, einer vorbestimmten Tragfähigkeitsreduzierung und/oder dem Erkennen einer Schadensklassen, ein Alarm ausgelöst und/oder eine zumindest teilweise Sperrung des Balkenbrückenbrückensegments und/oder eine Reduzierung des Verkehrsflusses über das Brückensegment veranlasst. Dadurch kann die Sicherheit erhöht werden, eine unnötige Verkehrsbehinderung aber vermieden werden.

Bevorzugt wird die Auslenkung mit einer Genauigkeit von besser als 1mm, insbesondere besser als 0,5mm pro 100m Tragwerkslänge bestimmt wird. Dies erhöht die Aussagekraft, Genauigkeit und Zuverlässigkeit der Brücke.

Mit besonderem Vorteil liegt die Last im Bereich von 10 bis 100t, und/oder wird sie über einen Bereich der Tragwerkslänge von weniger als 5% der Tragwerkslänge und/oder kleiner als 20m, insbesondere keiner als 15 m, aufgebracht. Dieser Bereich liegt insbesondere um die Mitte der Tragwerklänge. Dies erhöht die Aussagekraft, da übliche Brückensegmente besonders sensibel auf mittig aufgebrachte Lasten reagieren.

Weitere Aspekte und Vorteile sollen im Folgenden rein schematisch und exemplarisch anhand der Figuren erläutert werden. Dabei zeigen:
- Fig. 1: Darstellung der Auslenkungen von Brückensegmenten mit unterschiedlichen Tragweiten nach unterschiedlichen Schädigungen und
- Fig. 2: Darstellung der Schädigungen und Messwerte eines Brückensegments

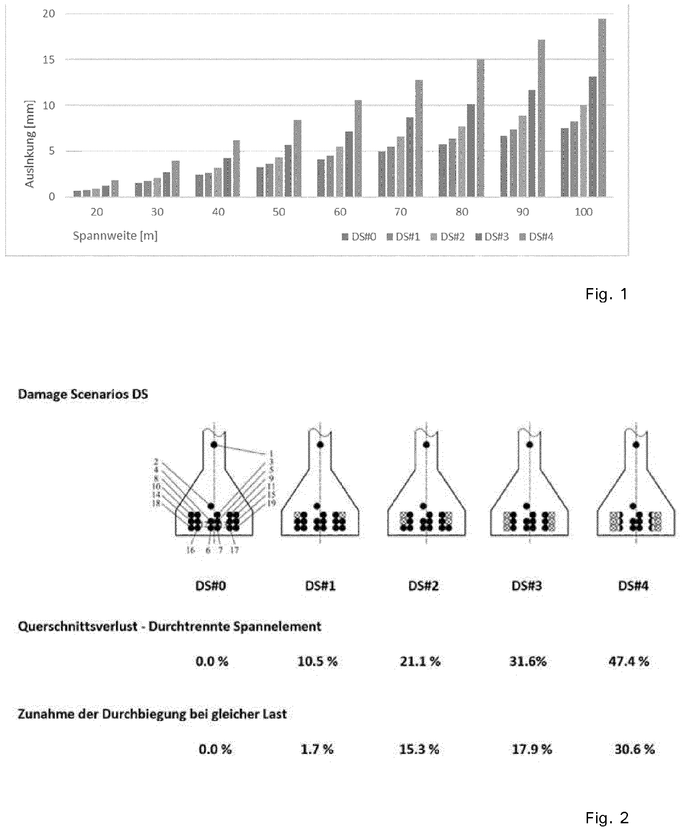

Fig. 1 zeigt die Auslenkungen von Balkenbrückensegmenten in unbeschädigtem Zustand und nach vier unterschiedlich starken Schädigungen. Innerhalb einer Tragweite sind die Säulen von links nach rechts den Schädigungen DS#0 (keine Schädigung) bis DS#4 (maximale Schädigung) zugeordnet. Die Art der Schädigung der Schadensklassen DS#0 bis DS#4 ist der Figur 2 unter durchtrennte Spannelemente zu erkennen.

Zur Schädigung wurden jeweils die angegebenen Prozente der Querschnitte der Spannseile getrennt. Danach wurde mittig mit 40 t belastet und die in Fig.1 gezeigte Auslenkung gemessen.

Fig. 2 zeigt für jede der Schädigungsklassen einen Teilquerschnitt durch ein Balkenbrückensegment mit 19 identischen Stahlseilen. Davon wurden einige nach und nach durchtrennt, was jeweils durch hohle Kreise mit Kreuzen verdeutlicht ist, im Gegensatz zu den durch volle Kreise dargestellten ungeschädigten Stahlseilen.

Unter den Querschnitten sind die Zunahme der Auslenkung verglichen mit DS#0 und die sich durch die Durchtrennung der Stahlseile ergebene Reduzierungen des aufsummierten wirksamen Stahlseilquerschnitts verglichen mit DS#0 gelistet.

Die Auslenkung ist dabei die bei der mittigen Belastung mit 40t gegenüber dem unbelasteten Zustand.

## Patentansprüche

1. Verfahren zum, insbesondere mobilen, Erkennen eines strukturellen Schadens eines Balkenbrückensegments,
wobei die Tragwerkslänge des Balkenbrückensegments bekannt ist oder bestimmt wird und,
wobei eine Auslenkung des Balkenbrückensegments während einer Last auf das Balkenbrückensegments gemessen wird, das Verfahren **dadurch gekennzeichnet, dass**
ein struktureller Schaden zumindest dann als erkannt angenommen wird, wenn die Auslenkung eine vorbestimmte Referenzauslenkung um mehr als eine vordefinierte Spanne, insbesondere 25% der Referenzauslenkung, überschreitet und/oder wobei zumindest dann, wenn die Referenzauslenkung nicht überschritten wird, angenommen wird, dass kein struktureller Schaden vorliegt,
wobei die Referenzauslenkung im Bereich von 0,001 und 0,005 mm pro 1m Tragwerkslänge bei 1t Last liegt.

2. Verfahren nach dem vorangehenden Anspruch **dadurch gekennzeichnet, dass** die Referenzauslenkung im Bereich von 0,002125 mm +/- 20% pro 1m Tragwerkslänge bei 1t Last liegt.

3. Verfahren nach dem vorangehenden Anspruch **dadurch gekennzeichnet, dass** die die Referenzauslenkung für einzelne Balkenbrückenseg-menttypen der folgenden Liste und/oder Gruppen von Balkenbrückenbrückensegmenttypen aus der folgenden Liste jeweils, insbesondere von einander abweichend, vorbestimmt ist:
• Balken aus Vollmaterial
• Balken als Hohlkasten
• Fachwerkträger
• Brücken aus Spannbeton
• Spannbetonvollplattenbrücke
• Spannbetonplattenbalkenbrücke
• Spannbetonplattenbalkenbrücke mit nachträglich vorgespannten Einzelstegen
• Spannbetonplattenbalkenbrücke mit ab Werk vorgespannten Einzelstegen
• Spannbetonhohlkastenträger
• Stahverbundbrücken
• Stahlverbundbrücke mit Hohlkastenüberbau
• Zweistegige Stahlverbundbrücke
• Mehrstegige Stahlverbundbrücke
• Stahlträgerbrücken
• Stahlträgerplattenbalkenbrücke mit orthotroper Fahrbahnplatte
• Stahlhohlkastenbrücke mit orthotroper Fahrbahnplatte
• Stahlträgerbrücke mit aufgelegter Betonplatte
• Stahlträgerhohlkastenbrücke
• Stahlträgerfachwerkträgerbrücke

4. Verfahren nach einem der vorstehenden Ansprüche, wobei bei Erkennen einer strukturellen Schädigung ein Alarm ausgelöst wird und/oder eine zumindest teilweise Sperrung des Balkenbrückensegments und/oder eine Reduzierung des Verkehrsflusses über das Brückensegment veranlasst wird.

5. Verfahren nach einem der vorstehenden Ansprüche, wobei die Auslenkung mit einer Genauigkeit von besser als 1mm, insbesondere besser als 0,5mm pro 100m Tragwerkslänge bestimmt wird.

6. Verfahren nach einem der vorstehenden Ansprüche, wobei die Last im Bereich von 10 bis 100t liegt, und insbesondere über einen Bereich der Tragwerkslänge von weniger als 20 m aufgebracht wird.

7. Verwendung einer vorbestimmten Referenzauslenkung im Bereich von 0,001 und 0,005 mm pro 1m Tragwerkslänge bei 1t Last, zur Erkennung struktureller Schäden eines Balkenbrückensegments,
wobei die Tragwerkslänge des Balkenbrückensegments bekannt ist oder bestimmt wird und,
wobei eine Auslenkung des Balkenbrückensegments während einer Last auf das Balkenbrückensegments gemessen wird, und mit der Referenzauslenkung verglichen wird, wobei bei Überschreiten Referenzauslenkung um mehr als eine vordefinierte Spanne, insbesondere 25% der Referenzauslenkung, eine strukturelle Schädigung erkannt wird und und/oder wobei zumindest dann, wenn die Referenzauslenkung nicht überschritten wird, angenommen wird, dass kein struktureller Schaden vorliegt.

8. Verwendung nach einem der vorstehenden Ansprüche, wobei bei Erkennen einer strukturellen Schädigung ein Alarm ausgelöst wird und/oder eine zumindest teilweise Sperrung des Balkenbrückensegments und/oder eine Reduzierung des Verkehrsflusses über das Balkenbrückensegments veranlasst wird.

## Claims

1. A method for the, in particular mobile, detection of a structural damage of a girder bridge segment,
wherein the structural length of the girder bridge segment is known or is determined and,
wherein a deflection of the girder bridge segment is measured during a load on the girder bridge segment, the method being **characterised in that** structural damage is assumed to be detected at least when the deflection exceeds a predetermined reference deflection by more than a predefined margin, in particular 25% of the reference deflection, and/or wherein, at least if the reference deflection is not exceeded, it is assumed that no structural damage is present, wherein the reference deflection is in the range of 0.001 and 0.005 mm per 1 m of supporting structure length at 1 t load.

2. A method according to the preceding claim, **characterised in that** the reference deflection is in the range of 0.002125 mm +/- 20% per 1 m of supporting structure length at 1 t load.

3. A method according to the preceding claim, **characterised in that** the reference deflection is predetermined for individual girder bridge segment types from the following list and/or groups of girder bridge segment types from the following list, in particular deviating from one another:
- Girders made of solid material
- Girders as box girders
- Truss girders
- Bridges made of prestressed concrete
- Prestressed concrete solid slab bridge
- Prestressed concrete slab girder bridge
- Prestressed concrete slab girder bridge with post-tensioned single webs
- Prestressed concrete slab girder bridge with individual webs prestressed ex works
- Prestressed concrete box girders
- Steel composite bridges
- Steel composite bridge with box girder superstructure
- Two-span steel composite bridge
- Multi-web steel composite bridge
- Steel girder bridges
- Steel girder plate girder bridge with orthotropic carriageway slab
- Steel box girder bridge with orthotropic deck slab
- Steel girder bridge with superimposed concrete slab
- Steel girder box girder bridge
- Steel girder truss bridge

4. A method according to one of the preceding claims, wherein an alarm is triggered and/or an at least partial closure of the girder bridge segment and/or a reduction of the traffic flow over the bridge segment is initiated when structural damage is detected.

5. A method according to one of the preceding claims, wherein the deflection is determined with an accuracy of better than 1 mm, in particular better than 0.5 mm per 100 metres of supporting structure length.

6. A method according to one of the preceding claims, wherein the load is in the range of 10 to 100 tonnes, and in particular is applied over a range of the supporting structure length of less than 20 m.

7. The use of a predetermined reference deflection in the range of 0.001 and 0.005 mm per 1 m of supporting structure length at 1 t load, for detecting structural damage to a girder bridge segment, wherein the supporting structure length of the girder bridge segment is known or is determined and,
wherein a deflection of the girder bridge segment during a load on the girder bridge segment is measured and compared with the reference deflection, wherein if the reference deflection is exceeded by more than a predefined range, in particular 25% of the reference deflection, structural damage is recognised and and/or wherein at least if the reference deflection is not exceeded, it is assumed that no structural damage is present.

8. The use according to one of the preceding claims, wherein an alarm is triggered and/or an at least partial blocking of the girder bridge segment and/or a reduction of the traffic flow over the girder bridge segment is initiated when structural damage is detected.

## Revendications

1. Procédé de détection, en particulier mobile, d'un dommage structurel d'un segment de pont à poutres,
dans lequel la longueur structurelle du segment de pont à poutres est connue ou est déterminée et,
dans lequel une déviation du segment de pont à poutres est mesurée pendant une charge sur le segment de pont à poutres, le procédé étant **caractérisé par le fait qu'**un dommage structurel est supposé être détecté au moins lorsque la déviation dépasse une déviation de référence prédéterminée de plus d'une marge prédéfinie, en particulier 25% de la déviation de référence, et/ou dans laquelle, au moins si la déviation de référence n'est pas dépassée, il est supposé qu'aucun dommage structurel n'est présent, la déviation de référence étant comprise entre 0,001 et 0,005 mm par 1 m de longueur de la structure porteuse à une charge de 1 t.

2. Procédé selon la revendication précédente, **caractérisé par le fait que** la déflexion de référence est de l'ordre de 0,002125 mm +/- 20% par 1 m de longueur de la structure porteuse sous une charge de 1 t.

3. Procédé selon la revendication précédente, **caractérisé par le fait que** la déflexion de référence est prédéterminée pour des types individuels de segments de pont à poutres de la liste suivante et/ou des groupes de types de segments de pont à poutres de la liste suivante, en particulier en s'écartant les uns des autres :
- Poutrelles en matériau plein
- Poutres en caisson
- Poutrelles en treillis
- Ponts en béton précontraint
- Pont à dalles pleines en béton précontraint
- Pont à poutres à dalle en béton précontraint
- Pont à poutres à dalle en béton précontraint avec âmes individuelles post-contraintes
- Pont à poutres à dalle en béton précontraint avec âmes individuelles précontraintes départ usine
- Poutre-caisson en béton précontraint
- Ponts en acier composite
- Pont mixte en acier avec superstructure à poutres caissons
- Pont mixte en acier à deux travées
- Pont mixte en acier à plusieurs âmes
- Ponts à poutrelles en acier
- Pont à poutrelles en acier avec dalle de chaussée orthotrope
- Pont à poutres caisson en acier avec dalle de tablier orthotrope
- Pont à poutres en acier avec dalle en béton superposée
- Pont en acier à poutre caisson
- Pont en treillis à poutres d'acier

4. Procédé selon l'une des revendications précédentes, dans lequel une alarme est déclenchée et/ou une fermeture au moins partielle du segment de pont à poutres et/ou une réduction du flux de circulation sur le segment de pont est initiée lorsque des dommages structurels sont détectés.

5. Procédé selon l'une des revendications précédentes, dans lequel la déflexion est déterminée avec une précision supérieure à 1 mm, en particulier supérieure à 0,5 mm par 100 mètres de longueur de la structure porteuse.

6. Procédé selon l'une des revendications précédentes, dans lequel la charge est comprise entre 10 et 100 tonnes et, en particulier, est appliquée sur une longueur de la structure porteuse inférieure à 20 m.

7. Utilisation d'une déflexion de référence prédéterminée comprise entre 0,001 et 0,005 mm par 1 m de longueur de la structure porteuse sous une charge de 1 t, pour détecter les dommages structurels d'un segment de pont à poutres, la longueur de la structure porteuse du segment de pont à poutres étant connue ou déterminée, et la déflexion du segment de pont à poutres étant déterminée, dans lequel une déviation du segment de pont à poutres pendant une charge sur le segment de pont à poutres est mesurée et comparée à la déviation de référence, dans lequel si la déviation de référence est dépassée de plus d'une plage prédéfinie, en particulier 25% de la déviation de référence, un dommage structurel est reconnu et/ou dans lequel au moins si la déviation de référence n'est pas dépassée, il est supposé qu'il n'y a pas de dommage structurel.

8. Utilisation selon l'une des revendications précédentes, dans laquelle une alarme est déclenchée et/ou un blocage au moins partiel du segment de pont à poutres et/ou une réduction du flux de trafic sur le segment de pont à poutres est initié lorsqu'un dommage structurel est détecté.
